Europäisches Patentamt

European Patent Office

Office européen des brevets

(11) Veröffentlichungsnummer: **0 157 277 B1**

# EUROPÄISCHE PATENTSCHRIFT

(45) Veröffentlichungstag der Patentschrift:
01.03.89

(51) Int. Cl.⁴: **H 05 B 3/82, F 24 H 1/20**

(21) Anmeldenummer: **85103147.6**

(22) Anmeldetag: **19.03.85**

(54) Einrichtung zum Erwärmen von Flüssigkeiten.

(30) Priorität: **22.03.84 DE 8408790 U**
**22.03.84 DE 8408791 U**

(43) Veröffentlichungstag der Anmeldung:
**09.10.85 Patentblatt 85/41**

(45) Bekanntmachung des Hinweises auf die Patenterteilung:
**01.03.89 Patentblatt 89/9**

(84) Benannte Vertragsstaaten:
**DE GB**

(56) Entgegenhaltungen:
**DE-A- 1 950 411**
**DE-A- 3 219 307**
**DE-B- 1 778 955**
**GB-B- 758 458**

(73) Patentinhaber: **EMIDE-METALLINDUSTRIE Gebr. Streicher, D-7209 Denkingen (DE)**

(72) Erfinder: **Schaub, Klaus, Langensteig 1, D-7211 Frittlingen (DE)**

(74) Vertreter: **Patentanwälte Kohler - Schwindling - Späth, Hohentwielstrasse 41, D-7000 Stuttgart 1 (DE)**

## Beschreibung

Die Erfindung bezieht sich auf eine Einrichtung zum Erwärmen von Flüssigkeiten, insbesondere Wasser, mit einem Behälter, in dessen einer Wand ein Flansch angeordnet ist, und mit einem Tauchheizkörper, der ein Heizrohr aufweist, das einen Heizwiderstand enthält und in Gestalt einer geschlossenen Schleife an dem Flansch flüssigkeitsdicht befestigt ist, wobei ein Trockengehschutz in wärmeleitender Verbindung mit dem Heizrohr steht, der mindestens einen Temperatur-Meßfühler enthält, der bei Überschreiten eines vorgegebenen Temperaturwertes auf einen Schalter einwirkt.

Derartige Einrichtungen sind aus der DE-A-3 219 307 bekannt und beispielsweise als kleine, tragbare, kannenartige Heißwasserbereiter im Handel, in denen Wassermengen in der Größenordnung von einem Liter für den Hausgebrauch erwärmt werden können. Es sind aber auch Einrichtungen der eingangs genannten Art bekannt, die als fest installierte Warmwasserbereiter Verwendung finden.

Der bei diesen Einrichtungen vorgesehene Trockengehschutz soll verhindern, daß Schäden, insbesondere Brände auftreten, wenn versehentlich vergessen wird, den Warmwasserbereiter wieder abzuschalten und demzufolge das Wasser nach und nach verkocht. Taucht schließlich der Tauchheizkörper aus dem Wasser auf, steigt seine Temperatur wegen der jetzt fehlenden Wärmeabfuhr durch das umgebende Wasser schnell an und bei einem vorbestimmten Temperaturwert spricht der im Trockengehschutz enthaltene Schalter an und trennt den Heizwiderstand des Heizrohres ab. Ebenso muß der Trockengehschutz ansprechen, wenn der Heizkörper unter Spannung gesetzt wird und überhaupt vergessen wurde, Wasser in den Heißwasserbereiter einzufüllen bzw. einzulassen.

Die bekannten Tauchheizkörper haben jedoch den Nachteil, daß sie verhältnismäßig kompliziert zu montieren und gegebenenfalls auszutauschen sind; außerdem bilden sie Ablagerungsstellen für Kalk und andere Sedimente, so daß ihre Zugänglichkeit weiter erschwert wird, wenn die Einrichtung sich bereits lange im Gebrauch befindet, insbesondere dann, wenn besonders kalkhaltiges Wasser erhitzt wurde.

Weiterhin sind bekannte Tauchheizkörper nicht in allen Betriebsfällen zureichend gesichert, insbesondere kann mit einem Schalter nur jeweils ein Anschluß vom Netz abgetrennt werden. Ist dies jedoch der Anschluß zum Rückleiter, bleibt die Verbindung der Phase zum Heizwiderstand unberührt, so daß bei möglicherweise teilweise geschmolzenem Tauchheizkörper der Heißwasserbereiter unter Spannung stehen kann.

Schließlich ist bei bekannten Heißwasserbereitern mit Trockengehschutz dann keine weitere Abschaltmöglichkeit bzw. Sicherung mehr vorhanden, wenn der Trockengehschutz defekt ist und folglich im Einsatzfall versagt.

Es ist daher bereits gefordert worden, derartige Heißwasserbereiter mit einem zusätzlichen, zweiten Sicherungselement, einem sogenannten Katastrophenschutz zu versehen, um die Betriebssicherheit auch in Extremfällen zu gewährleisten.

Bei bekannten Heißwasserbereitern mit einem derartigen Katastrophenschutz wird dieser dadurch bewirkt, daß der Heizleiter so ausgelegt wird, daß er nach Versagen des Trockengehschutzes bei ca. 800° Celsius bzw. 1000° Celsius durchbrennt. Dies ist jedoch eine Temperatur, bei der thermoplastische Gehäuse, wie sie üblicherweise für Heißwasserbereiter verwendet werden, bereits derart in Mitleidenschaft gezogen werden, daß die Dichtheit des Gehäuses und die elektrische Sicherheit nicht mehr gewährleistet sind.

Der Erfindung liegt daher die Aufgabe zugrunde, eine Einrichtung der eingangs genannten Art dahingehend weiterzubilden, daß sie besonders einfach und ihre aktiven Elemente leicht zugänglich bzw. austauschbar sind. Auch soll die erfindungsgemäße Einrichtung nur minimale Flächen zur Kalkablagerung bieten und schließlich soll die Betriebssicherheit auch in extremen Zuständen gewährleistet sein, insbesondere durch ein zweipoliges Abschalten des Heizwiderstandes.

Diese Aufgabe wird erfindungsgemäß dadurch gelöst, daß der Trockengehschutz ein am Flansch flüssigkeitsdicht befestigtes Metallteil aufweist, mit dem der mindestens eine Temperatur-Meßfühler in wärmeleitender Verbindung steht, daß das Metallteil den Flansch von der Innenseite des Behälters nach außen durchsetzt und daß die Temperatur-Meßfühler von außen zugänglich sind.

Die der Erfindung zugrundeliegende Aufgabe wird damit vollkommen gelöst. Der mindestens eine Temperatur-Meßfühler ist nämlich nicht mehr direkt der zu erwärmenden Flüssigkeit ausgesetzt, sonden hierzu dient das Metallteil, das optimal so gestaltet werden kann, daß sich nur minimale Kalkablagerungen bilden. Dadurch, daß das Metallteil den Flansch von außen nach innen durchsetzt, kann der mindestens eine Temperatur-Meßfühler vollkommen auf der «trockenen» Seite montiert werden, so daß er optimal zugänglich und damit leicht austauschbar ist, ohne daß zunächst Kalkablagerungen, Korrosionen od.dgl. beseitigt werden müssen.

Dies erhöht selbstverständlich auch die Betriebssicherheit der Einrichtung, selbst in extremen Betriebszuständen, weil infolge der für minimale Ablagerungen optimierbaren Oberfläche des Metallteils und der Anbringung des mindestens einen Temperatur-Meßfühlers auf der «trockenen» Seite sich der Ansprechpunkt des Meßfühlers auch bei Langzeitgebrauch nicht verändert. Der von der zu erwärmenden Flüssigkeit völlig unbeeinflußte Temperatur-Meßfühler wird stets sicher bei Überschreiten einer vorbestimmten Temperatur ansprechen und damit für ein Abschalten des Heizwiderstandes sorgen.

Bei einer weiteren bevorzugten Ausführungsform der Erfindung ist das Metallteil als Metallhülse mit einem langgestreckten Abschnitt ausgebildet, der eine Kapillarröhre eines Kapillarschalters dicht umschließt, wobei die Metallhülse weiterhin einen erweiterten Abschnitt aufweist, der eine Schmelzsicherung umschließt.

Diese Maßnahme hat den Vorteil, daß bei nahezu unveränderter äußerer Form des Tauchheizkörpers ein zweites Sicherungselement vorgesehen werden kann, das praktisch derselben Temperatur ausgesetzt ist wie das erste, bekannte Sicherungselement, nämlich der Kapillarschalter. Die zweite Abschaltung durch den Katastrophenschutz muß allerdings einen höheren Temperatur-Ansprechwert haben als die erste und dient ausschließlich als Schutz dann, wenn die erste Abschaltung versagt.

Damit kann eine zweipolige Abschaltung des Heizwiderstandes bewirkt werden und zusätzliche Bauelemente, die Ablagerungsflächen für Kalk u.dgl. darstellen, sind nicht erforderlich.

In bevorzugter Ausgestaltung der Erfindung ist die Metallhülse mit ihrem erweiterten Abschnitt an eine Öffnung des Flansches dicht angeschlossen.

Diese Maßnahme hat den Vorteil, daß das Innere der Metallhülse von der vom Heizrohr abgewandten Seite des Flansches zugänglich ist, so daß ein Austausch des Kapillarschalters und/oder der Schmelzsicherung leicht möglich ist, ohne die Dichtheit des Tauchheizkörpers gegenüber der zu erwärmenden Flüssigkeit erneut herstellen zu müssen. Besonders vorteilhaft ist dabei natürlich die Möglichkeit, die Schmelzsicherung einfach austauschen zu können, weil diese beim Ansprechen naturgemäß zerstört wird.

Bei einer weiteren Ausbildung der Erfindung, bei welcher der Heizwiderstand das Heizrohr erst ab einem vorgegebenen Abstand vom Flansch ausfüllt, so daß eine zu hohe Erwärmung des Flansches, der Teil eines thermoplastischen Behälters sein kann, vermieden wird, ist erfindungsgemäß vorgesehen, daß der erweiterte Abschnitt mindestens so lang wie der Abstand ist.

Dies hat den Vorteil, daß die im erweiterten Abschnitt enthaltene Schmelzsicherung sich in Anlage an einem Abschnitt des Heizrohrs befindet, der besonders schnell beim Trockengehen die Ansprechtemperatur der Schmelzsicherung erreicht. Es soll jedoch nochmals darauf hingewiesen werden, daß die Schmelzsicherung noch nicht beim Trockengehen an sich ansprechen darf sondern erst bei Versagen des Trockengehschutzes, beispielsweise eines Kapillarrohrbegrenzers, wonach die Temperatur dann nochmals um einen erheblichen Betrag ansteigt.

In einer weiteren Ausgestaltung der Erfindung, bei der das Heizrohr sich zunächst in einem ersten Abschnitt vom Flansch fort erstreckt, dann jedoch nach Durchlaufen von Bögen einen dem Flansch zu weisenden schleifenartigen Abschnitt durchläuft, ist erfindungsgemäß vorgesehen, daß der erweiterte Abschnitt an dem schleifenartigen Abschnitt anliegt.

Diese Maßnahme hat den Vorteil, daß einerseits zwar der erweiterte Abschnitt mit der Schmelzsicherung sich in der Nähe des Flansches befindet und damit die Schmelzsicherung leicht ausgetauscht werden kann, andererseits aber der Wärmeübergang zum erweiterten Abschnitt zu damit zur Schmelzsicherung an einem Teil des Heizrohrs bewirkt wird, der auf voller Betriebstemperatur ist und sich im Katastrophenfall daher auch besonders schnell auf die Ansprechtemperatur der Schmelzsicherung erwärmt.

Bei dieser vorstehend genannten Anordnung sind mehrere Ausführungsbeispiele denkbar, bei denen der schleifenartige Abschnitt etwa unter 90° oder parallel zum erweiterten Abschnitt verläuft und an diesem oben oder unten oder seitlich anliegt oder ihn umschlingt.

Weiterhin ist eine Ausführungsform bevorzugt, bei welcher der Flansch über eine Silikon-Dichtplatte auf einem durchbrochenen Abschnitt der Behälterwand aufliegt und sich auf dessen Rückseite über einen Gegenflansch abstützt.

Diese Maßnahme hat den Vorteil, daß der Tauchheizkörper mit dem Trockengehschutz als komplette Einheit in den ansonsten fertigen Behälter eingebaut werden kann und ein Einspritzen eines Flansches in den Behälter nicht erforderlich ist. Die Silikon-Dichtplatte sorgt für eine ausreichende Dichtheit des Behälters.

Bei einem weiteren Ausführungsbeispiel der Erfindung ist das Metallteil als den Flansch durchsetzende Kupferbuchse ausgebildet, wobei der Meßfühler Teil eines manuell einrückbaren Bimetall-Schnappscheibenbegrenzers und in einer axialen Bohrung der Buchse eingesetzt ist, und daß das Heizrohr fest mit der dem Meßfühler gegenüberliegenden Seite der Buchse verbunden ist.

Dieses Ausführungsbeispiel ist besonders vorteilhaft, weil die den Flansch durchsetzende Kupferbuchse Wärme sehr gut leitet, ohne den darum herum befindlichen Flansch, dessen Wärmeleitfähigkeit zweckmäßigerweise wesentlich geringer gewählt wird, zu sehr zu erwärmen. Der an sich bekannte manuell einrückbare Bimetall-Schnappscheibenbegrenzer auf der vom Wasserraum abgewandten Seite gewährleistet mit seinem Meßfühler ein schnelles Ansprechen und darüber hinaus die Möglichkeit, den Heißwasserbereiter durch einfaches manuelles Betätigen eines Einschaltstiftes wieder in Betrieb zu nehmen.

Die Buchse kann erfindungsgemäß ein- oder mehrstückig sein, um jeweils gewünschte Isolieroder Wärmeleitstrukturen realisieren zu können.

Bei einer bevorzugten Ausgestaltung der Erfindung ist die Buchse mit einer umlaufenden Zone schlechter Wärmeleitfähigkeit versehen, die einen Mittelbolzen von einem umlaufenden Rand trennt, und ferner grenzen der Rand dicht an den Flansch und das Heizrohr bzw. der Meßfühler axial an den Mittelbolzen. Die Zone kann dabei entweder ein Einschnitt sein, sodaß sie von einem Luftpolster gebildet wird, sie kann aber auch eine Hülse aus schlecht wärmeleitendem Material sein.

Diese Maßnahme hat den Vorteil, daß der Wärmeübergang von derjenigen Stelle, an die das Heizrohr grenzt, zum Flansch weiter vermindert wird, weil ein Wärmeübergang nur noch über einen dünnen, nach Einbringen des Einschnittes verbleibenden Boden und einen schmalen Rand erfolgen kann. Dadurch wird es beispielsweise möglich, den Tauchheizkörper zusätzlich mit der Eigenschaft eines sog. Katastrophenschutzes zu versehen. Hierunter versteht man eine zweite Abschaltmöglichkeit, die erst bei einer sehr viel höheren Temperatur als der Ansprechtemperatur des Trockengehschutzes wirksam ist. Ist der Trockengehschutz beispielsweise defekt, wird eine Katastrophe dann dadurch verhindert, daß bei einer zweiten, höheren Temperatur ein weiteres, im allgemeinen nicht reversibles Element anspricht. Hierzu kann man beispielsweise den im Heizrohr enthaltenen Heizwiderstand so auslegen, daß er in einem Bereich zwischen 800 °C und 1000 °C durchbrennt. Voraussetzung hierfür ist allerdings, daß der Heißwasserbereiter an sich einer derartigen Temperatur standhält und nicht schon vorher beispielsweise das Gehäuse an einer Stelle durchschmilzt, die den Tauchheizkörper hält. Aufgrund der vorstehend beschriebenen Maßnahme, den Wärmeübergang weiter herabzusetzen, kann jedoch gewährleistet werden, daß auch bei den genannten hohen Temperaturen im Bereich von 800 °C bis 100 °C die angrenzende Behälterwand noch keinen Schaden nimmt.

In einer weiteren Ausgestaltung der Erfindung liegt der Flansch über mindestens eine Silikon-Dichtplatte auf einem durchbrochenen Abschnitt der Behälterwand auf und stützt sich auf dessen Rückseite über einen Gegenflansch ab.

Diese Maßnahme hat den Vorteil, daß der Flansch flüssigkeitsdicht und gleichzeitig hitzebeständig nachträglich in den Abschnitt der Behälterwand eingebaut werden kann und nicht bereits bei der Hestellung des Behälters mit eingespritzt werden muß.

Besonders bevorzugt ist eine Ausführungsform, bei der an der Behälteraußenseite der Buchse eine Schmelzsicherung angeordnet ist, beispielsweise in einer Schelle.

Diese Maßnahme hat nämlich den Vorteil, daß die Schmelzsicherung leicht montiert und ebenso leicht nach Ansprechen ausgetauscht werden kann.

Bei einer weiteren Ausführungsform der Erfindung ist zwischen Flansch und Behälterwand ein Abschnitt eines Isolierbleches eingeschlossen, das unterhalb des vom Flansch wegführenden Heizrohres verläuft und dieses von unten abstützt. Bevorzugt weist das Isolierblech dabei im Bereich der Abstützung nach unten weisende Füße auf, die auf den Boden des Heißwasserbereiters aufliegen.

Diese Maßnahme hat den weiteren Vorteil, daß die ansonsten frei nach außen ragenden Heizrohre mechanisch abgestützt werden, so daß sie nicht versehentlich nach unten durchgebogen werden können, beispielsweise beim Reinigen des Heißwasserbereiters. Werden die Heizrohre nämlich versehentlich nach unten abgebogen, können sie einmal zu sehr in die Nähe des ebenfalls thermoplastischen Bodens kommen, der beim darauffolgenden Aufheizen dann schmilzt. Selbst dann aber, wenn das Herabbiegen bemerkt und die Heizrohre wieder nach oben zurückgebogen werden, kann die Struktur der Heizrohre durch das Hin- und Herbiegen so geschädigt werden, daß die Heizrohre entweder abbrechen oder ein Kontakt zwischen dem Heizwiderstand und dem isolierten Äußeren der Rohre hergestellt wird.

Das Isolierblech besteht vorzugsweise aus Edelstahl, der bekanntlich Wärme schlecht leitet, so daß der Wärmeübergang zwischen Heizrohr, Flansch und Behälterwand vermindert wird. Auch kann die Fläche des Isolierbleches sehr groß gewählt sein, so daß das Blech zusätzlich als Kühlkörper wirkt.

Weitere Vorteile ergeben sich aus der Beschreibung der beigefügten Zeichnung.

Ausführungsbeispiele der Erfindung sind in der Zeichnung dargestellt und werden in der nachfolgenden Beschreibung näher erläutert. Es zeigen:

Fig. 1 einen kannenartigen Heißwasserbereiter mit einem erfindungsgemässen Tauchheizkörper, in Schnittdarstellung;

Fig. 2 eine Detaildarstellung, im Schnitt, eines Trockengehschutzes, wie er bei der Anordnung gemäß Fig. 1 verwendet wird;

Fig. 3 eine Alternative für eine Metallhülse eines Trockengehschutzes;

Fig. 4 ein Anschlußschema für den Trockengehschutz gemäß Fig. 1;

Fig. 5a und 5b bis Fig. 10a und 10b 6 verschiedene Ausführungsbeispiele von erfindungsgemäßen Tauchheizkörpern, jeweils in seitlicher Schnittdarstellung und in Draufsicht;

Fig. 11 eine Darstellung wie Fig. 1, im Ausschnitt, jedoch bei einem Ausführungsbeispiel mit einer besonderen Art der Anbringung von Tauchheizkörper und Trockengehschutz;

Fig. 12a und 12b ein Isolierblech, wie es beim Ausführungsbeispiel gemäß Fig. 11 verwendet wird, im Schnitt und in Vorderansicht.

Fig. 13 eine Schnittdarstellung durch den Unterteil des Heißwasserbereiters gemäß Fig. 1 mit einem weiteren Ausführungsbeispiel eines Tauchheizkörpers;

Fig. 14 einen Ausschnitt aus Fig. 13 in vergrößertem Maßstab;

Fig. 15 und 16 Varianten des Ausführungsbeispiels gemäß Fig. 14.

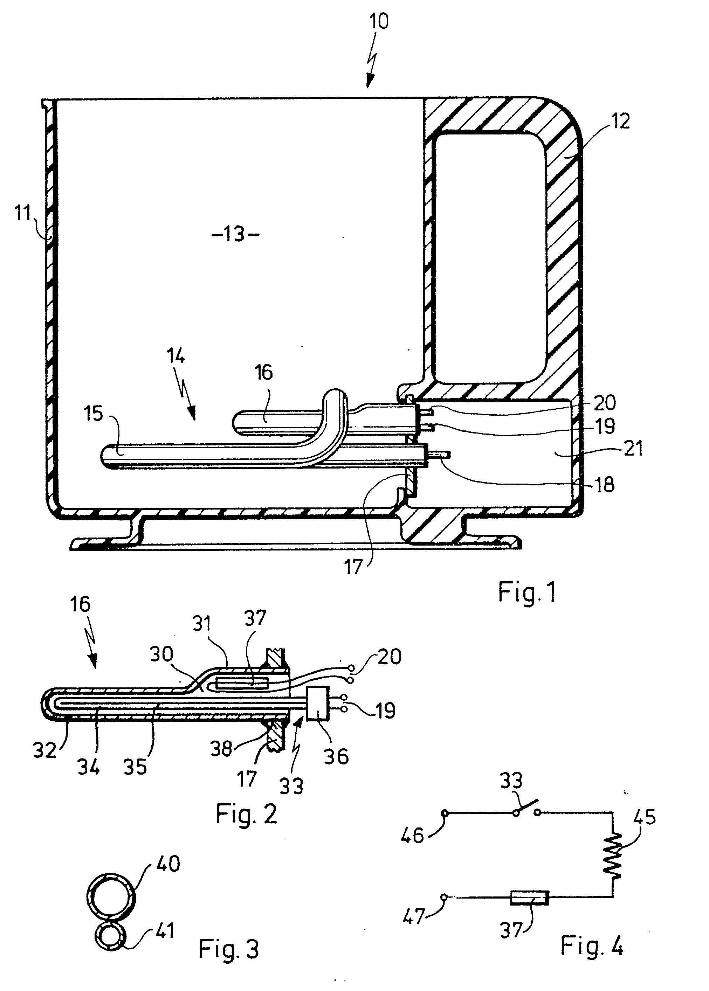

In Fig. 1 ist 10 ein kannenartiger Heißwasserbereiter mit einem thermoplastischen Kunststoffbehälter 11, an den ein Griff 12 angeformt ist. Der Behälter 11 umschließt einen Wasserraum 13, in dessen Bodenbereich sich ein Tauchheizkörper 14 befindet. Der Tauchheizkörper 14 umfaßt ein Heizrohr 15 und einen Trockengehschutz 16, die beide seitlich aus einem Flansch 17 austreten, der dicht am Kunststoffbehälter 11 angeordnet ist.

Die Einzelheiten des Aufbaues des Heißwasserbereiters 10, abgesehen vom Tauchheizkörper 14, sind an sich bekannt und bilden nicht den Gegenstand der vorliegenden Erfindung.

Die Heizrohre 15 treten senkrecht aus dem Flansch 17 aus, verlaufen innerhalb des Wasserraumes 13 einfach oder mehrfach schleifenartig gewunden und kehren wieder zum Flansch 17 zurück. An ihrem außenliegenden Ende sind sie mit Anschlüssen 18 versehen. Auch der Trockengehschutz 16 tritt senkrecht aus dem Flansch 17 aus und steht im Bereich des Wasserraumes 13 in gut wärmeleitender Verbindung mit den Heizrohren 15, vorzugsweise ist er in bestimmten Bereichen an dieser angeschweißt. An der Außenseite ist der Trockengehschutz 16 mit Anschlüssen 19, 20 versehen, die zu zwei Schaltelementen im Trockengehschutz 16 führen, wie nachstehend noch im einzelnen geschildert wird. Die Anschlüße 18 bis 20 befinden sich in einer Anschlußkammer 21 unterhalb des Griffes 12, die weiterhin in Fig. 1 nicht dargestellte Anschlußelemente, beispielsweise einen Gerätestecker od.dgl. enthält.

Man erkennt bereits aus Fig. 1, daß Sorge dafür getragen werden muß, daß der Flansch 17 sich nicht zu sehr erwärmt, weil er in unmittelbarem Kontakt mit dem umgebenden thermoplastischen Kunststoffbehälter 11 steht. Es ist daher bei derartigen Tauchheizkörpern bekannt, den Heizwiderstand innerhalb der Heizrohre 15 erst in einem bestimmten Mindestabstand vom Flansch 17 beginnen zu lassen, so daß die Wärmeübertragung auf den Flansch 17 auf ein akzptables Maß zurückgeführt wird.

Fig. 2 zeigt in vereinfachter Darstellung den Trockengehschutz 16 in Schnittdarstellung.

Man erkennt eine Metallhülse 30, beispielsweise aus Kupfer, die einen Abschnitt 31 aufweist, der gegenüber einem verjüngten Abschnitt 32 erweitert ist. Der Trockengehschutz 16 enthält zunächst in an sich bekannter Weise einen Kapillarschalter 33, dessen Röhre 34, die eine Kapillare 35 umschließt, dicht vom verjüngten Abschnitt 32 der Metallhülse 30 umschlossen wird. Die Röhre 34 ist an einen Druckschalter 36 angeschlossen, der mit den Anschlüssen 19 verbunden ist. Es ist bekannt, daß bei Überschreiten einer vorgegebenen Temperaturschwelle sich die Flüssigkeit in der Kapillare 35 so sehr ausdehnt, daß der Druckschalter 36 anspricht.

Zusätzlich ist jedoch im Trockengehschutz 16 und zwar in dessen erweitertem Abschnitt 31 ein weiteres Sicherungselement in Gestalt einer Schmelzsicherung 37 vorgesehen. Die Schmelzsicherung 37 ist mit den Anschlüssen 20 verbunden. Die Schmelzsicherung 37 hat im allgemeinen ein metallisches Gehäuse und ist daher in einem, in Fig. 2 nicht dargestellten Schlauch aus Polytetrafluoräthylen angeordnet. Infolge der äußerst dichten Packung der Röhre 34 im verjüngten Abschnitt 32 und der Röhre 34 sowie der Schmelzsicherung 37 gemeinsam im erweiterten Abschnitt 31 ist jedoch ein ausreichender Wärmeübergang zwischen allen Elementen des Trockengehschutzes 16 gewährleistet. Man erkennt aus Fig. 2 außerdem, daß die Metallhülse 30 in eine Öffnung 38 des Flansches 17 derart dicht eingesetzt ist, daß das Innere der Metallhülse 30 mühelos von außen zugänglich ist. Dies ist besonders dann von Vorteil, wenn die Schmelzsicherung 37 nach einem Ansprechen ausgetauscht werden muß. Dieser Austausch kann dann nämlich sehr einfach vonstatten gehen, ohne daß die Dichtheit des Kunststoffbehälters 11 im Bereich des Flansches 17 davon beeinflußt wird. Um diese Dichtheit zu gewährleisten, sind sowohl die Metallhülse 30 wie auch die Heizrohre 15 in entsprechende Öffnungen 38 des Flansches 17 eingeschweißt oder eingelötet.

Fig. 3 zeigt in einer Schnittdarstellung quer zur Längsachse eine weitere Ausführungsform einer Metallhülse für den Trockengehschutz 16, die aus zwei aneinandergesetzten Röhren, nämlich einer dicken Röhre 40 zur Aufnahme der Schmelzsicherung 37 und einer dünnen Röhre 41 zur Aufnahme der Röhre 34 des Kapillarschalters 33 besteht.

Es versteht sich jedoch, daß diese Ausführungsformen von Metallhülsenformen lediglich beispielhaft zu verstehen sind und daß darüberhinaus noch eine Vielzahl anderer Hülsenformen denkbar sind, die sich in geeigneter Weise an die Form der Heizrohre 15 anschmiegen, um einen möglichst guten Wärmeübergang zu gewährleisten.

Fig. 4 zeigt ein Anschlußschema für einen Trockengehschutz entsprechend der vorliegenden Erfindung. Man erkennt einen Heizwiderstand 45, dessen eines Ende über den symbolisierten Druckschalter 36 und dessen anderes Ende über die symbolisierte Schmelzsicherung 37 mit Anschlußklemmen 46 bzw. 47 verbunden sind. Bei Ansprechen beider Sicherungselemente 33, 37 ist der Heizwiderstand vollkommen vom Netz abgetrennt, unabhängig davon, an welcher der Klemmen 46, 47 Phase bzw. der Rückleiter liegen. Eine ungewollte Verbindung der metallischen Umhüllung des Tauchheizkörpers 14, des Flansches 17 oder gar eines metallischen Behälters des Heißwasserbereiters 10 mit Phase ist daher ausgeschlossen.

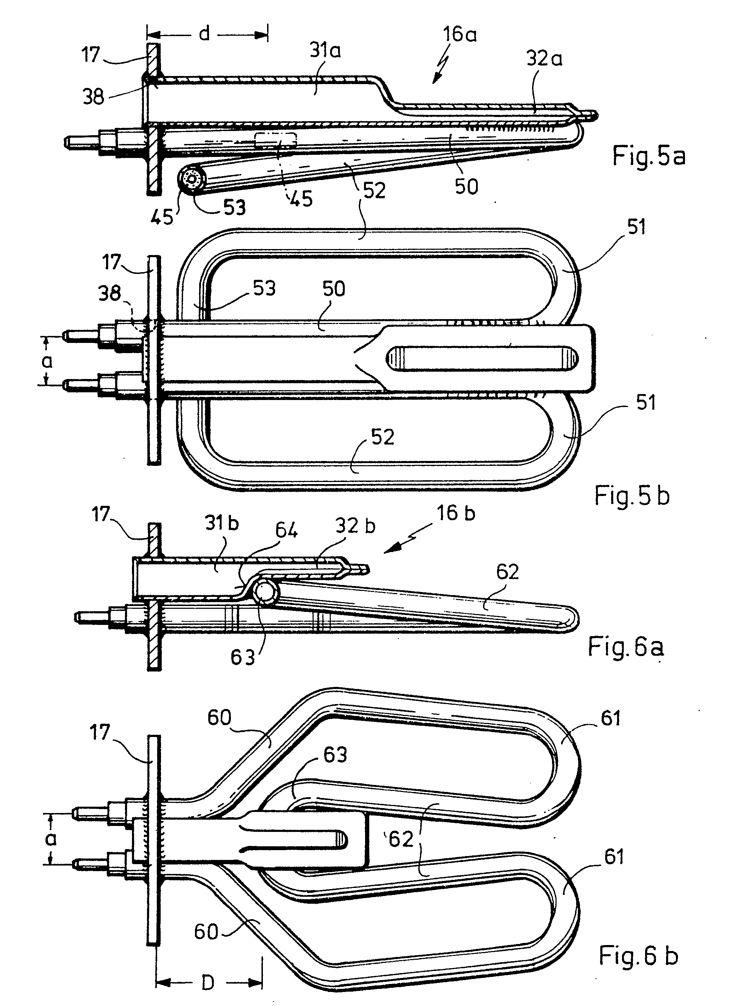

Die Fig. 5a und 5b zeigen im Detail ein erstes Ausführungsbeispiel eines erfindungsgemäßen Tauchheizkörpers. Man erkennt, daß aus dem Flansch 17 zunächst ein erster gerader Abschnitt 50 der Heizrohre austritt, der über Bögen 51 in gegenläufige gerade Abschnitte 52, die parallel zu den ersten Abschnitten 50 verlaufen, übergeht, und daß sich die Heizrohre schließlich in einem parallel zum Flansch 17 in dessen Nähe verlaufenden dritten geraden Abschnitt 53 schließen. Die zweiten geraden Abschnitte 52 verlaufen dabei schräg nach unten, so daß der dritte gerade Abschnitt 53 unterhalb der ersten geraden Abschnitte 50 verläuft.

Weiterhin ist in Fig. 5a zu erkennen, daß der Heizwiderstand 45 erst ab einem bestimmten Abstand d vom Flansch 17 die Heizrohre ausfüllt. Die wesentliche Wärmeentwicklung in den Heizrohren tritt deshalb erst ab diesem Abstand d vom Flansch 17 auf, so daß dieser nicht zu sehr erhitzt wird.

Der Trockengehschutz 16a des Ausführungsbeispieles gemäß Fig. 5a und 5b verfügt dementsprechend über einen relativ langgestreckten erweiterten Abschnitt 31a, dessen Länge größer ist als der Abstand d und daher die darin enthaltene Schmelzsicherung 37 (in dieser und in folgenden Figuren nicht im einzelnen dargestellt) unter den vollen Wärmeeinfluß des Heizwiderstandes 45 kommt.

Man erkennt weiterhin, daß der Trockengehschutz 16 mit seinem erweiterten Abschnitt 31 und seinem verjüngten Abschnitt 32 auf den parallelen ersten geraden Abschnitten 50 aufliegt und, vorzugsweise im Bereich des vorderen Endes, mit diesen verschweißt oder verlötet ist.

Beim zweiten detailliert dargestellten Ausführungsbeispiel gemäß den Fig. 6a und 6b ist eine etwas andere Führung der Heizrohre vorgesehen. Diese treten nämlich in Gestalt erster abgewinkelter Abschnitte 60, sich nach vorne aufspreizend aus dem Flansch 17 aus, laufen dann etwas aufeinander zu, gehen alsdann in erste Bögen 61 über, verlaufen dann in zweiten abgewinkelten Abschnitten 62 wieder auf den Flansch 17 zu, weiten sich dabei jedoch etwas auf und schließen sich endlich in einem zweiten Bogen 63, dessen äußerer Umfang sich in einem Abstand D vom Flansch 17 befindet.

Der Trockengehschutz 16b dieses Ausführungsbeispiels steht gegenüber demjenigen des Ausführungsbeispiels der Fig. 5a und 5b auf dem Kopf. Der zweite Bogen 63 liegt dabei am Übergang 64 zwischen erweitertem Abschnitt 31b und verjüngtem Abschnitt 32b an. Da sich der zweite Bogen 63 in der Mitte der Heizrohre befindet, ist er stets auf voller Betriebstemperatur, so daß die Schmelzsicherung im erweiterten Abschnitt 31b in unmittelbarem Kontakt mit diesem Abschnitt der Heizrohre befindet.

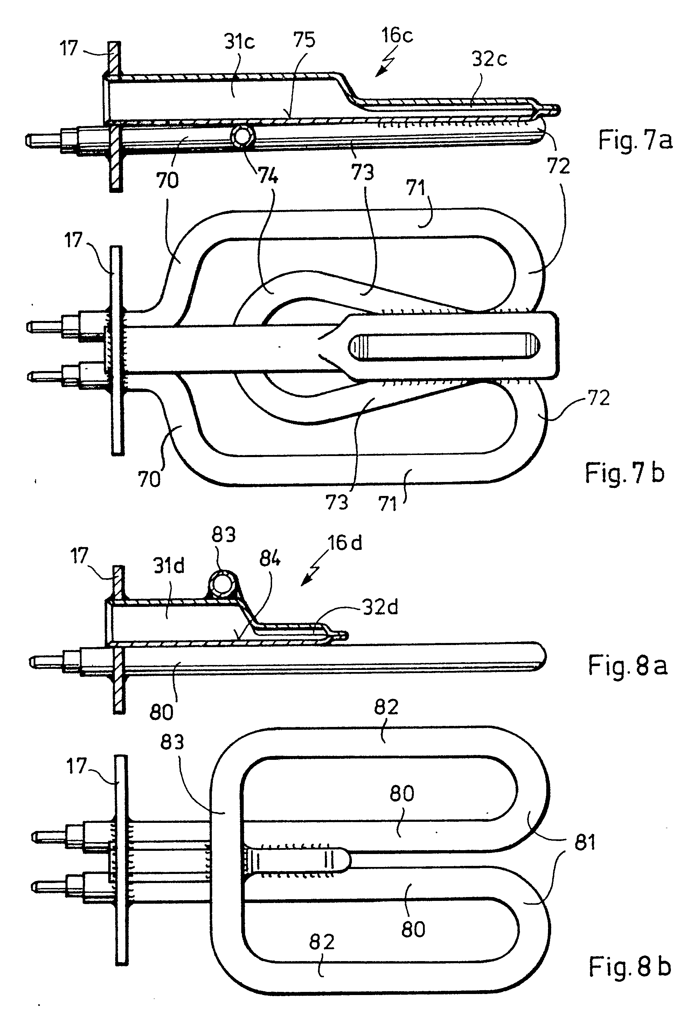

Beim dritten detailliert dargestellten Ausführungsbeispiel gemäß den Fig. 7a und 7b ist eine Anordnung gewählt, bei der sich die Heizrohre lediglich in einer Ebene befinden. Hierzu treten sie in S-förmigen ersten Bögen 70 aus dem Flansch 17 aus, gehen dann in gerade Abschnitte 71 senkrecht zum Flansch 17 über, verlaufen dann in zweiten Bögen 72 zum Flansch 17 zurück, gehen in abgewinkelte Abschnitte 73, die sich etwas öffnen über und schließen sich endlich in einem dritten Bogen 74.

Der Trockengehschutz 16c dieses Ausführungsbeispiels ist wiederum langgestreckt und seine flache Unterseite 75 liegt derart auf den Heizrohren auf, daß der erweiterte Abschnitt 31c im Bereich des dritten Bogens 74 und der verjüngte Abschnitt 32c im Bereich des Übergangs der zweiten Bögen 72 zu den dritten abgewinkelten Abschnitten 73 anliegt.

Beim vierten detailliert dargestellten Ausführungsbeispiel gemäß den Fig. 8a und 8b treten die Heizrohre wiederum in Gestalt erster gerader Abschnitte 80 senkrecht aus dem Flansch 17 aus, trennen sich dann nach außen in ersten Bögen 81, laufen in zweiten geraden Abschnitten 82 parallel zu den ersten geraden Abschnitten 80 wieder auf den Flansch 17 zu und schließen sich dann in einem brückenartigen zweiten Bogen 83, der über die ersten geraden Abschnitte 80 sowie den Trockengehschutz 16d herüber erstreckt.

Der zweite Bogen 83 kann in diesem Falle an der Oberseite des erweiterten Abschnittes 31d oder auch im Übergang zwischen erweitertem Abschnitt 31d und verjüngtem Abschnitt 32d anliegen. Die flache Unterseite 84 des Trockengehschutzes 16d liegt an den ersten geraden Abschnitten 80 an.

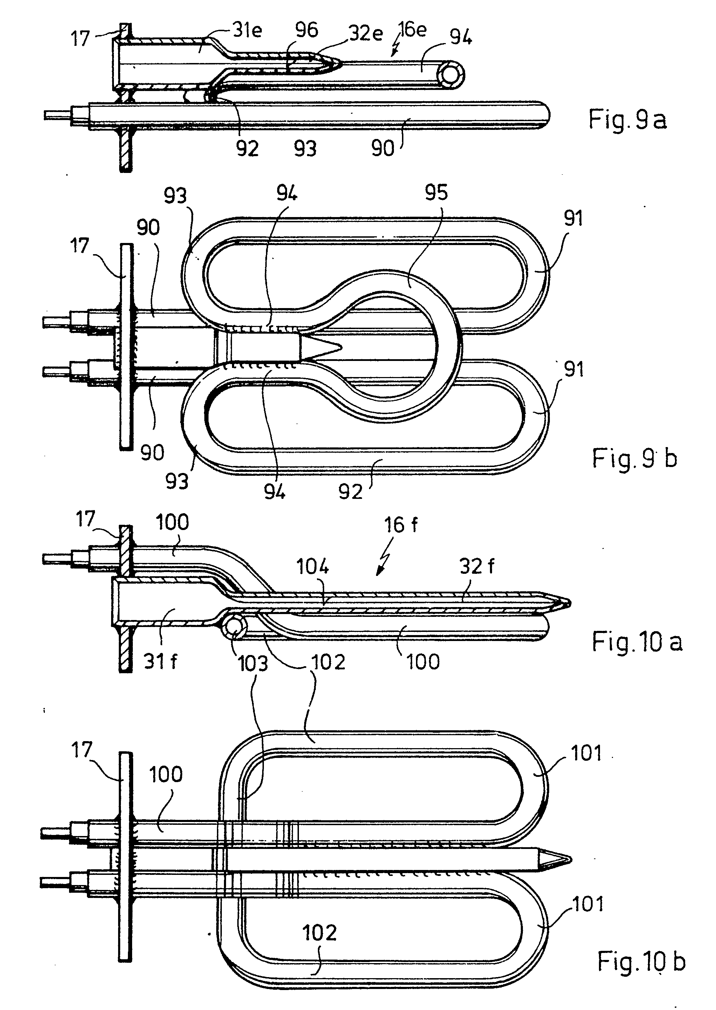

Beim fünften detailliert dargestellten Ausführungsbeispiel gemäß den Fig. 9a und 9b erstrecken sich die Heizrohre wiederum in zwei Ebenen. Sie treten als erste gerade Abschnitte 90 senkrecht aus dem Flansch 17 aus, laufen an der Vorderseite in ersten Bögen 91 auseinander und parallel zu den ersten geraden Abschnitten 90 in zweiten geraden Abschnitten 92 in der selben Ebene wieder zurück auf den Flansch 17 zu. Es schließen sich zweite Bögen 93 an, die aufeinander zu und nach oben gebogen sind und in dritte gerade Abschnitte 94 übergehen, die etwa oberhalb der ersten geraden Abschnitte 90, mit diesen fluchtend, verlaufen. Die Heizrohre schließen sich endlich in einem dritten Bogen 95.

Wie man erkennen kann, liegen bei diesem Ausführungsbeispiel die dritten geraden Abschnitte 94 mit dem Übergang zu den zweiten Bögen 93 an der Längsseite 96 des verjüngten Abschnittes 32e bzw. dem Übergang zum erweiterten Abschnitt 31e an.

Schließlich zeigen die Fig. 10a und 10b noch ein sechstes detailliert dargestelltes Ausführungsbeispiel. Bei diesem treten die Heizrohre zunächst ebenfalls als erste gerade Abschnitte 100 senkrecht aus dem Flansch 17 aus, werden jedoch zugleich schräg nach unten abgeknickt und gehen dort wieder in einen geraden, senkrecht zum Flansch 17 gerichteten Verlauf über. Sie laufen dann in Bögen 101 nach außen auseinander und kehren in Gestalt zweiter gerader Bögen 102 wieder in Richtung auf den Flansch 17 zurück. Sie schließen sich dann unterhalb des hinteren Teiles der ersten geraden Abschnitte 100 in einem dritten geraden Abschnitt 103.

Der Trockengehschutz 16f dieses Ausführungsbeispiels erstreckt sich zwischen den Abschnitten der Heizrohre dieses Ausführungsbeispiels derart, daß der dritte gerade Abschnitt 103 im Bereich des Übergangs zwischen erweitertem Abschnitt 31f und verjüngtem Abschnitt 32f anliegt, während der verjüngte Abschnitt 32f der Länge nach an den unteren ersten geraden Abschnitt 100 anliegt und zwar längs seiner flachen Unterseite 104.

Wie man aus den Ausführungsbeispielen gemäß Fig. 5 bis 10 erkennen kann, sind eine Fülle von Varianten im Rahmen der vorliegenden Erfindung denkbar, um einen möglichst guten Wärmeübergang zwischen Heizrohren und Trockengehschutz bzw. Katastrophenschutz in dessen beiden Bereichen zu bewerkstelligen, ohne daß der Flansch einer zu hohen Temperatur ausgesetzt wird.

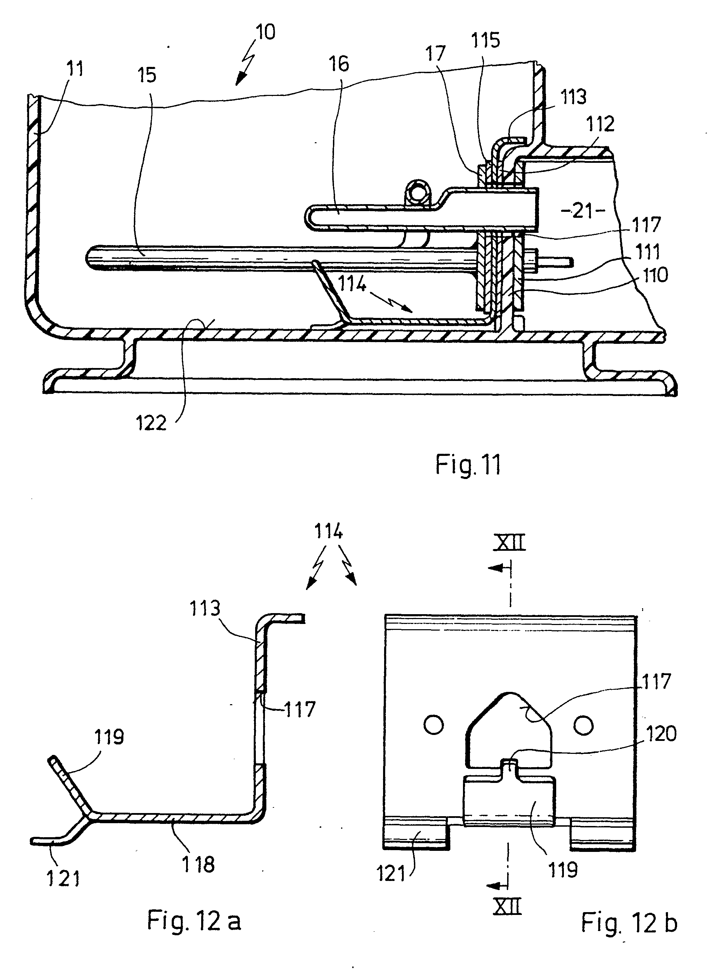

Bei einem weiteren Ausführungsbeispiel, wie es in den Fig. 11, 12a und 12b dargestellt ist, liegt wieder eine Anordnung vor, wie sie bereits in Fig. 1 angedeutet wurde. Während jedoch beim Ausführungsbeispiel gemäß Fig. 1 der Flansch 17 in den Kunststoffbehälter 11 eingespritzt bzw. angespritzt war, ist beim Ausführungsbeispiel gemäß Fig. 11 eine Variante dargestellt, bei welcher der Flansch 17 mit Heizrohren 15 und Trockengehschutz 16 nachträglich in den Kunststoffbehälter 11 eingesetzt werden kann. Hierzu ist an einen Abschnitt 110 der Behälterwand außen ein Gegenflansch 111 angesetzt, während sich an der gegenüberliegenden Innenseite des Abschnittes 110 zunächst eine Silikon-Dichtplatte 112, dann ein Abschnitt 113 eines Isolierblechs 114, weiterhin eine zweite Silikon-Dichtplatte 115 und schließlich der Flansch 17 befindet. 111, 110, 112, 113, 115, 117 werden durch in Fig. 11 nicht dargestellte Schrauben oder dergleichen fest zusammengehalten.

Die Elemente 111, 110, 112, 113, 115 sind mit jeweils fluchtenden Öffnungen 117 versehen, durch welche die rückwärts vorstehenden Abschnitte der Heizrohre 15 und des Trockengehschutzes 16 nach außen in die Anschlußkammer 21 ragen können.

Die Silikon-Dichtplatten 112, 115 dienen dazu, den Kunststoffbehälter 11 im Bereich der Öffnung 117 sicher abzudichten. Das vorzugsweise aus Edelstahl mit schlechter Wärmeleitfähigkeit bestehende Isolierblech 114 dient zur thermischen Isolierung des Flansches 17 vom Abschnitt 110 des Kunststoffbehälters 11.

Wie man aus Fig. 11 zusammen mit Fig. 12a und 12B erkennt, setzt sich der vertikale Abschnitt 113 des Isolierblechs 114 unten in einem parallel zum Boden 122 des Behälters 11 verlaufenden flachen Teil 118 fort, der vorne in der Mitte zu einem Vorsprung 119 nach oben umgebogen ist, der an seiner Spitze in einer Nase 120 ausläuft. Die beiden Seiten des flachen Teiles 118 sind hingegen nach unten zu Füßen 121 umgebogen, die auf dem Boden 122 aufliegen.

Die Fläche des Isolierblechs 114, insbesondere des flachen Teils 118, der sich im Wasser befindet, ist wesentlich größer gewählt, als dies zur Abstützung erforderlich wäre, um die Eigenschaft eines Kühlblechs zu erreichen.

Die Gestaltung des Isolierblechs 114 gemäß Fig. 11 bis 12b ist so gewählt, daß Heizrohre 15 gehalten werden können, die beispielsweise die Gestalt des Ausführungsbeispiels gemäß Fig. 8a und 8b haben. Es würden dann die ersten geraden Abschnitte 80 auf dem Vorsprung 119 des Isolierblechs 114 aufliegen und zwar zu beiden Seiten der Nase 120.

Durch das Isolierblech 114 wird somit eine Halterung der Heizrohre 15 von unten erreicht, insbesondere dann, wenn sich die Füße 121 unten auf dem Boden 122 abstützen können.

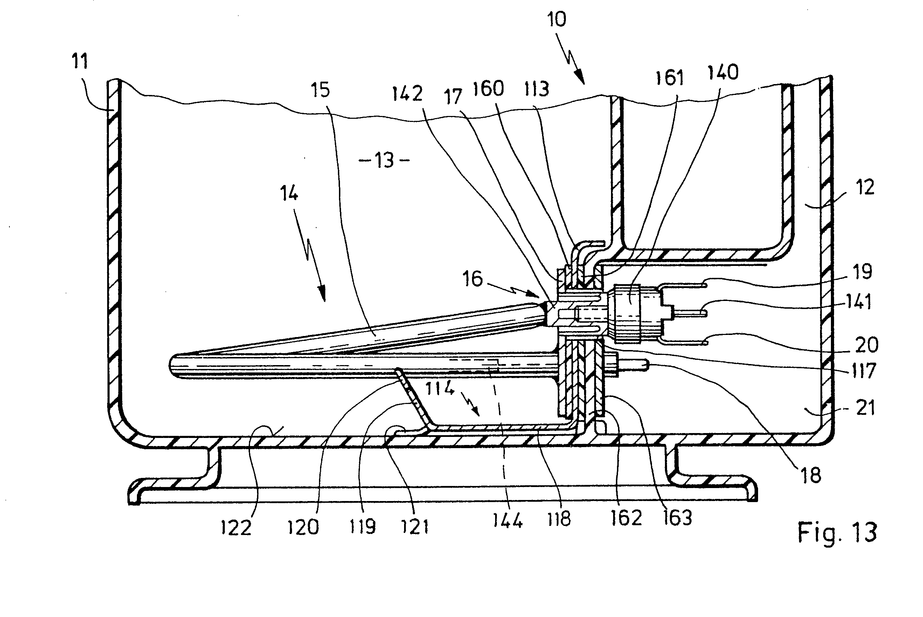

Fig. 13 zeigt eine vergrößerte Darstellung des Bodenbereiches des Heißwasserbereiters 10 gemäß Fig. 1 mit einer Variante des Tauchheizkörpers 16. Gleiche Elemente sind mit gleichen Bezugszeichen versehen.

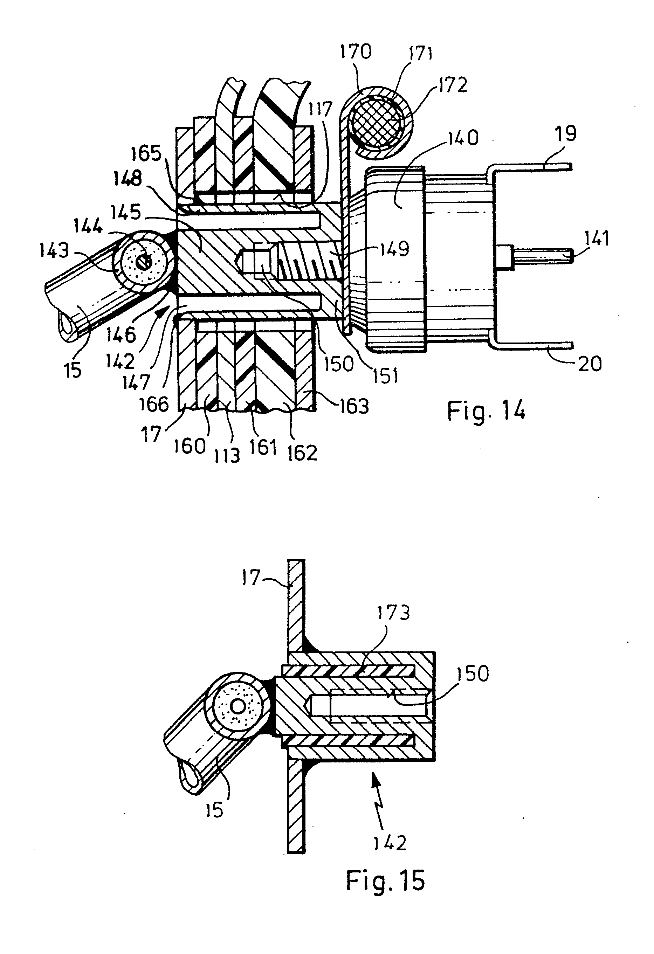

Wie man insbesondere aus Fig. 14 erkennen kann, befindet sich in der Anschlußkammer 21 ein Bimetall-Schnappscheibenbegrenzer 140, wie er an sich bekannt ist. Ein derartiger Begrenzer 140 ist mit einem in Fig. 14 nicht dargestellten Bimetall-Plättchen versehen, das mit der Meßtemperatur beaufschlagt wird und bei Überschreiten einer vorbestimmten Grenztemperatur einen Schnappschalter betätigt, der darin in eine mechanisch stabile Lage umspringt, aus der er selbst nicht zurückkehrt, selbst wenn die Temperatur wieder absinkt. Zum Rücksetzen des Schalters betätigt man einen Einschaltstift, wie er mit 141 in Fig. 13 und 14 eingezeichnet ist.

Zur Montage des Begrenzers 140 ist eine Kupferbuchse 142 dicht in den Flansch 17 eingesetzt. Die zum Wasserraum 13 hinweisende Stirnfläche der Kupferbuchse 142 ist mit einem Mantel 143 des Heizrohres 15, der einen Heizwiderstand 144 umschließt, fest verbunden. Die Kupferbuchse 142 ist mit einem umlaufenden Einschnitt 147 versehen, der die Kupferbuchse 142 fast über ihre gesamte Tiefe durchsetzt und damit einen Mittelbolzen 145 von einem dünnen Rand 148 trennt, während ein dünner Boden 151 stehen bleibt.

Der Mantel 143 ist nun an einer mit 146 bezeichneten Lötstelle an den Mittelbolzen 145 hart angelötet oder angeschweißt. Der Begrenzer 140 ist mit einem Meßfühler 149 versehen, der in eine axiale Bohrung 150 in den Mittelbolzen 145 eingeschraubt ist.

Zur Montage des Tauchheizkörpers wird zwischen einen durchbrochenen Abschnitt 162 des Kunststoffbehälters 11 und den Flansch 17 zunächst eine Silikon-Dichtplatte 160, dann der senkrechte Abschnitt 113 des Isolierblechs 114 und sodann eine weitere Silikon-Dichtplatte 161 gelegt. Auf der vom Wasserraum 13 abgewandten Seite des Abschnittes 162 stützt sich der Tauchheizkörper an einem Gegenflansch 163 ab. Die bereits in Zusammenhang mit dem Isolierblech 114 erwähnte Öffnung 117 durchsetzt ebenso die Silikon-Dichtplatten 160, 161, den Abschnitt 162 des Kunststoffbehälters 11 sowie den Gegenflansch 163.

Man erkennt aus Fig. 14 ohne weiteres, daß der Wärmeübergang zwischen dem Heizwiderstand 144 bzw. dem Mantel 143 des Heizrohres 15 und dem Meßfühler 149 des Begrenzers 140 zwar sehr gut ist, weil zwischen diesen Elementen lediglich der kurze Kupfer-Mittelbolzen 145 liegt, andererseits ist der Wärmeübergang zu dem umgebenden Abschnitt 162 des Kunststoffbehälters 11 sehr erschwert, weil die Wärme durch körperlichen Übergang nur über den dünnen Boden 151, den Rand 148, den Flansch 17, die Silikon-Dichtplatte 160, den senkrechten Abschnitt 113 und die weitere Silikon-Dichtplatte 161 erfolgen kann. Insbesondere aufgrund des dünnen Randes 148 und des schlecht wärmeleitenden Abschnittes 113 des Isolierblechs 114 ergibt sich der gewünschte schlechte Wärmeübergang.

Der Rand 148 kann an den Flansch 17 angelötet sein, wie bei 165 oder 166 angedeutet. Der Boden 151 kann sich auch an der dem Wasserraum 13 zugewandten Seite der Kupferbuchse 142 befinden, dies hätte den Vorteil, daß sich im Einschnitt 147 keine Kalkablagerungen absetzen können, die den Wärmeübergang wieder verbessern.

Man erkennt ferner in Fig. 14, daß erfindungsgemäß ein Katastrophenschutz durch eine Schmelzsicherung vorgesehen sein kann, die an der Außenseite des Mittelbolzens 145 in wärmeleitendem Kontakt mit diesem steht.

Bei dem in Fig. 14 dargestellten Ausführungsbeispiel dient hierzu eine Kupferschelle 170, deren eines freie Ende an die äußere Stirnseite des Mittelbolzens 145 gepreßt ist, beispielsweise in dem es zusammen mit dem Meßfühler 149 in den Mittelbolzen 145 eingeschraubt wurde. Das entgegengesetzte freie Ende der Kupferschelle 170 ist umgebogen und umschließt einen Schlauch aus Polytetrafluorethylen (PTFE), der seinerseits eine Mikro-Temperatursicherung 172 umschließt.

Man kann ohne weiteres erkennen, daß die Temperatur des Heizrohres 15 sich ohne nennenswerte Verluste über den Mittelbolzen 145 auf die Kupferschelle 170 und von dort auf die Sicherung 172 übertragen kann. Auch ist leicht ersichtlich, daß die im trockenen Außenbereich befindliche Sicherung 172 leicht ausgetauscht werden kann, insbesondere dann, wenn sie einmal angesprochen hat.

Die Fig. 15 und 16 zeigen noch Varianten der Buchse 142.

Bei dem in Fig. 15 dargestellten Ausführungsbeispiel ist die Kupferbuchse 142 unverändert, anstelle des luftgefüllten Einschnitts 147 gemäß Fig. 14 ist jedoch bei diesem Ausführungsbeispiel eine Hülse 173 aus schlecht wärmeleitendem Material vorgesehen, wodurch die mechanische Stabilität erhöht wird. Auch wird auf diese Weise vermieden, daß sich ein Hohlraum, wie ihn der Einschnitt 147 bildet, nach und nach mit Ablagerungen füllen kann, wodurch auch die Isolierwirkung mit der Zeit abnehmen kann.

**Patentansprüche**

1. Einrichtung zum Erwärmen von Flüssigkeiten, insbesondere Wasser, mit einem transportablen und nach oben zum Befüllen offenen Behälter (11), in dessen einer Wand ein Flansch (17) angeordnet ist, und mit einem sich im wesentlichen in einer Ebene parallel zum Boden des Behälters (11) erstreckenden Tauchheizkörper (14), der ein Heizrohr (15) aufweist, das einen Heizwiderstand (45) enthält und in Gestalt einer geschlossenen Schleife an dem Flansch (17) flüssigkeitsdicht befestigt ist, wobei das Heizrohr (15) in körperlich wärmeleitender Verbindung mit einem Metallteil, das den Flansch (17) von der Innenseite des Behälters (11) nach außen durchsetzt, eines Trokkengehschutzes (16) steht, der mindestens einen von außen zugänglichen Temperatur-Meßfühler (34, 35, 37; 149, 172) enthält, der bei Überschreiten eines vorgegebenen Temperaturwertes auf ein Betätigungsglied einwirkt, dadurch gekennzeichnet, daß das Metallteil (30; 142, 142a) mit einer umlaufenden Zone schlechter Wärmeleitfähigkeit versehen ist, die einen Mittelbolzen (145) von einem umlaufenden Rand (148) trennt, daß der Rand (148) dicht an den Flansch (17) angrenzt und das Heizrohr (15) axial an den Mittelbolzen (145) grenzt.

2. Einrichtung nach Anspruch 1, dadurch gekennzeichnet, daß das Metallteil (30; 142, 142a) aus gut wärmeleitendem Material ausgebildet ist, das in einer axialen Bohrung den Meßfühler (34, 35, 37; 149) aufweist.

3. Einrichtung nach Anspruch 2, dadurch gekennzeichnet, daß der Meßfühler (149) Teil eines manuell einrückbaren Bimetall-Schnappscheibenbegrenzers (140) ist.

4. Einrichtung nach Anspruch 1 bis 3, dadurch gekennzeichnet, daß das Metallteil (142) mehrteilig ausgebildet ist.

5. Einrichtung nach Anspruch 1 bis 4, dadurch gekennzeichnet, daß die umlaufende Zone als Einschnitt (147) ausgebildet ist.

6. Einrichtung nach einem der Ansprüche 1 bis 4, dadurch gekennzeichnet, daß die umlaufende Zone als gesonderte Hülse (173) aus schlecht wärmeleitendem Material ausgebildet ist.

7. Einrichtung nach einem der Ansprüche 1 bis 6, dadurch gekennzeichnet, daß das Metallteil (142a) von einer dicht abschließenden Hülse (174) aus schlecht wärmeleitendem Material umgeben ist, die zwischen dem Metallteil (142a) und dem Flansch (17) flüssigkeitsdicht angeordnet ist.

8. Einrichtung nach einem der Ansprüche 1 bis 7, dadurch gekennzeichnet, daß an der Behälteraußenseite des Metallteils (142) eine Schmelzsicherung (172) wärmeleitend mit dem Metallteil (142) verbunden ist.

9. Einrichtung nach Anspruch 8, dadurch gekennzeichnet, daß an der Behälteraußenseite des Metallteils (142) eine Schelle (170) angeordnet ist, deren eines freies Ende mit dem Metallteil (142) verbunden ist und deren anderes freies Ende die Schmelzsicherung (172) umschließt.

10. Einrichtung nach einem der Ansprüche 1 bis 9, dadurch gekennzeichnet, daß zwischen Flansch (17) und einem Abschnitt (110, 162) der Behälterwand ein Abschnitt (113) eines Isolierblechs (114) eingeschlossen ist.

11. Einrichtung nach Anspruch 10, dadurch gekennzeichnet, daß das Isolierblech (114) im Bereich der Abstützung nach unten weisende Füße (121) aufweist, die auf einem Boden (122) des Behälters (11) aufliegen.

12. Einrichtung nach Anspruch 10 oder 11, dadurch gekennzeichnet, daß das Isolierblech (114) aus Edelstahl besteht.

13. Einrichtung nach einem der Ansprüche 10 bis 12, dadurch gekennzeichnet, daß die Oberfläche des Isolierblechs (114) wesentlich größer als diejenige des Flansches (17) ist.

14. Einrichtung nach Anspruch 1, dadurch gekennzeichnet, daß das Metallteil (30) mit einem langgestreckten Abschnitt (32) ausgebildet ist, der eine Kapillarröhre (34) eines Kapillarschalters (33) dicht umschließt, wobei die Metallhülse (30) vorzugsweise weiterhin einen erweiterten Abschnitt (31) aufweist, der eine Schmelzsicherung (37) umschließt.

15. Einrichtung nach Anspruch 14, dadurch gekennzeichnet, daß das Metallteil (30) mit seinem erweiterten Abschnitt (31) an einer Öffnung (38) des Flansches (17) dicht angeschlossen ist.

16. Einrichtung nach einem der vorhergehenden Ansprüche, dadurch gekennzeichnet, daß der Heizwiderstand (45) das Heizrohr (15) erst ab einem vorgegebenen Abstand (d) vom Flansch (17) ausfüllt.

17. Einrichtung nach Anspruch 16, dadurch gekennzeichnet, daß der erweiterte Abschnitt (31) mindestens so lang wie der Abstand (d) ist.

18. Einrichtung nach einem der vorhergehenden Ansprüche, dadurch gekennzeichnet, daß das Heizrohr (15) sich zunächst in einem ersten Abschnitt (60, 61; 70, 71; 80; 90; 100) vom Flansch (17) forterstreckt, dann jedoch nach Durchlaufen von Bögen (61; 72; 81; 91; 101) einen dem Flansch (17) zu weisenden schleifenartigen Abschnitt (62, 63; 73, 74; 82, 83; 92 bis 95; 102, 103) durchläuft, und daß der erweiterte Abschnitt (31) an dem schleifenartigen Abschnitt (62, 63; 73, 74; 82, 83; 92 bis 95; 102, 103) anliegt.

19. Einrichtung nach Anspruch 18, dadurch gekennzeichnet, daß die Achsen des schleifenartigen Abschnittes (63) und des erweiterten Abschnittes (31b) etwa um 90° zueinander verlaufen, und daß der schleifenartige Abschnitt (63) im Bereich des Überganges (64) vom langgestreckten Abschnitt (32b) zum erweiterten Abschnitt (31b) an diesem anliegt.

20. Einrichtung nach Anspruch 18, dadurch gekennzeichnet, daß die Achsen des schleifenartigen Abschnittes (74) und des erweiterten Abschnittes (31c) etwa unter 90° zueinander verlaufen, und daß der schleifenartige Abschnitt (74) im Bereich des erweiterten Abschnittes (31c) an dessen Ober- oder Unterseite (76) anliegt.

21. Einrichtung nach Anspruch 18, dadurch gekennzeichnet, daß die Achsen des schleifenartigen Abschnittes (63) und des erweiterten Abschnittes (31d) etwa unter 90° zueinander verlaufen, und daß der schleifenartige Abschnitt (83) den erweiterten Abschnitt (31d) wenigstens teilweise umschlingt.

22. Einrichtung nach Anspruch 18, dadurch gekennzeichnet, daß die Achsen des schleifenartigen Abschnittes (94) und des erweiterten Abschnittes (31c) wenigstens näherungsweise parallel verlaufen, und daß der schleifenartige Abschnitt (94) im Bereich des erweiterten Abschnittes (31c) an dessen Längsseite (96) anliegt.

23. Einrichtung nach einem der Ansprüche 14 bis 22, dadurch gekennzeichnet, daß das Metallteil (30) aus zwei aneinander gesetzten Röhren (40, 41) besteht, von denen die eine (40) die Schmelzsicherung (37) und die andere (41) den Kapillarschalter (33) umschließt.

24. Einrichtung nach einem der vorhergehenden Ansprüche, dadurch gekennzeichnet, daß der Flansch (17) über mindestens eine Silikon-Dichtplatte (112, 115; 160, 161) auf einem durchgebrochenen Abschnitt (110; 162) der Behälterwand (11) aufliegt und sich auf dessen Rückseite über einen Gegenflansch (111; 163) abstützt.

## Claims

1. Apparatus for heating liquids, particularly water, with a transportable container (11), which is open at the top for filling purposes and in whose one wall is arranged a flange (17) and with an immersion heater (14) extending substantially in one plane parallel to the bottom of container (11) and which has a heating pipe (15), which contains a heating resistor (45) and is fixed in liquid-type manner in the form of a closed loop to the flange (17), the heating pipe (15) in physically heat conducting connection with a metal part, which traverse flange (17) from the inside of container (11) to the outside, of a running dry cutout (16), which contains at least one temperature sensor (34, 35, 37; 149, 172) accessible from the outside and which on exceeding a given temperature value acts on an actuating element, characterized in that the metal part (30, 142, 142a) is provided with an all-round poor thermal conductivity area, which separates a centre bolt (145) from an all-round border (148), the latter is closely adjacent to the flange (17) and the heating pipe (15) is axially adjacent to the centre bolt (145).

2. Apparatus according to claim 1, characterized in that the metal part (30, 142, 142a) is made from a good heat conducting material, which has the sensor (34, 35, 37; 149) in an axial bore.

3. Apparatus according to claim 2, characterized in that the sensor (149) is part of a manually engageable bimetal snap disk limiter (140).

4. Apparatus according to claims 1 to 3, characterized in that the metal part (142) is in multipart form.

5. Apparatus according to claims 1 to 4, characterized in that the all-round area is constructed as a recess (147).

6. Apparatus according to one of the claims 1 to 4, characterized in that the all-round area is constructed as a separate sleeve (173) from a poor heat conducting material.

7. Apparatus according to one of the claims 1 to 6, characterized in that the metal part (142a) is surrounded by a tightly terminating sleeve (174) of poor heat conducting material, which is arranged in liquid-type manner between the metal part (142a) and flange (17).

8. Apparatus according to one of the claims 1 to 7, characterized in that on the container outside of the metal part (142) a fuse (172) is thermally conductively connected to metal part (142).

9. Apparatus according to claim 8, characterized in that on the container outside of metal part (142) is provided a clip (170), whose one free end is connected to metal part (142) and whose other free end surrounds the fuse (172).

10. Apparatus according to one of the claims 1 to 9, characterized in that between the flange (17) and a portion (110, 162) of the container wall is enclosed a portion (113) of an insulating plate (114), which runs below the heating pipe (15) directed away from the flange (17) and supports the same from below.

11. Apparatus according to claim 10, characterized in that in the vicinity of the support, the insulating plate (114) has downwardly pointing feet (121), which rest on a base (122) of container (11).

12. Apparatus according to claims 10 or 11, characterized in that the insulating plats (114) is made from high-grade steel.

13. Apparatus according to one of the claims 10 to 12, characterized in that the surface of the insulating plate (114) is much larger than that of flange (17).

14. Apparatus according to claim 1, characterized in that the metal part (30) is constructed with an elongated portion (32), which tightly surrounds a capillary tube (34) of a capillary switch (33), the metal sleeve (30) preferably having a widened portion (31), which surrounds a fuse (37).

15. Apparatus according to claim 14, characterized in that the widened portion (31) of metal part (30) is tightly connected to an opening (38) of flange (17).

16. Apparatus according to one of the preceding claims, characterized in that the heating resistor (45) only fills the heating pipe (15) as from a predetermined spacing (d) from flange (17).

17. Apparatus according to claim 16, characterized in that the widened portion (31) is at least as long as the spacing (d).

18. Apparatus according to one of the preceding claims, characterized in that the heating pipe (15) initially extends in a first portion (60, 61, 70, 71, 80, 90, 100) away from flange (17), then passes through arcs (61, 72, 81, 91, 101) and a loop-shaped portion (62, 63, 73, 74, 82, 83, 92 to 95, 102, 103) directed towards flange (17) and that the widened portion (31) engages on the loop-shaped portion (62, 63, 73, 74, 82, 83, 92 to 95, 102, 103).

19. Apparatus according to claim 18, characterized in that the axes of the loop-shaped portion (63) and the widened portion (31b) are at approximately 90° to one another and that the loop-shaped portion (63) in the vicinity of the transition (64) between the elongated portion (32b) and the widened portion (31b) engages on the latter.

20. Apparatus according to claim 18, characterized in that the axes of the loop-shaped portion (74) and the widened portion (31c) are at approximately 90° to one another and that the loop-shaped portions (74) in the vicinity of the widened portion (31c) engages on its top or bottom (76).

21. Apparatus according to claim 18, characterized in that the axes of the loop-shaped portion (63) and the widened portion (31d) are at approximately 90° to one another and that the loop-shaped portion (83) at least partly loops round the widened portion (31d).

22. Apparatus according to claim 18, characterized in that the axes of the loop-shaped portion (94) and the widened portion (31c) are approximately parallel to one another and that the loop-shaped portion (94) engages in the vicinity of the widened portion (31c) on the longitudinal side (96) thereof.

23. Apparatus according to one of the claims 14 to 22, characterized in that the metal part (30) comprises two engaged tubes (40, 41), whereof one (40) surrounds the fuse (37) and the other (41) surrounds the capillary switch (33).

24. Apparatus according to one of the preceding claims, characterized in that the flange (17) rests by means of at least silicone sealing plate (112, 115, 160, 161) on a perforated portion (110, 162) of container wall (11) and is supported on its rear by means of a counterflange (111, 163).

**Revendications**

1. Dispositif pour chauffage des liquides, essentiellement l'eau, avec un récipient (11) transportable, ouvert sur le haut pour le remplissage, dans une des parois duquel est disposée une bride (17), et un élément de chauffage plongeur (14) disposé essentiellement sur un plan parallèle au fond du récipient (11), comprenant un tube de chauffage (15) équipé d'une résistance chauffante (45) et fixé en forme d'une boucle fermé et de façon étanche aux liquides sur la bride (17), le tube de chauffage (15) étant en liaison physique transcalorique avec une pièce métallique, traversant la bride (17) de la face intérieure du récipient (11) vers l'extérieur, d'un dispositif de protection à sec (16) contenant au moins une sonde de mesure de température (34, 35, 37; 149, 172) accessible de l'extérieur, agissant sur un élément d'actionnement dès qu'une valeur de température prédéfinie est dépassée, caractérisé en ce que la pièce métallique (30; 142, 142a) est munie d'une zone périphérique de mauvaise conductibilité thermique, séparée par un boulon médian (145) d'un bord (148) enveloppant, que le bord (148) est limitrophe de la bride (17) et le tube de chauffage (15) avoisine axialement le boulon médian (145).

2. Dispositif selon la revendication 1, caractérisé en ce que la pièce métallique (30; 142, 142a) est formée d'un matériau thermoconducteur et renferme la sonde de mesure (34, 35, 37; 149) dans un alésage axial.

3. Dispositif selon la revendication 2, caractérisé en ce que la sonde de mesure (149) est une partie d'un limiteur à disque à déclic à bilame (140).

4. Dispositif selon les revendications 1 à 3, caractérisé en ce que la pièce métallique (142) est composée de plusieurs parties.

5. Dispositif selon les revendications 1 à 4, caractérisé en ce que la zone périphérique forme un creux (147).

6. Dispositif selon une des revendications 1 à 4, caractérisé en ce que la zone périphérique est formée d'une douille séparée (173) en un matériau de mauvaise conductibilité thermique.

7. Dispositif selon une des revendications 1 à 6, caractérisé en ce que la piéce métallique (142a) est entourée d'une douille très étanche (174) en un matériau de mauvaise conductibilité thermique, disposée de façon étanche entre la pièce métallique (142a) et la bride (17).

8. Dispositif selon une des revendications 1 à 7, caractérisé en ce que la pièce métallique (142) à l'extérieur du récipient est reliée en conductivité thermique avec un fusible (172).

9. Dispositif selon la revendication 8, caractérisé en ce que sur la pièce métallique (142) à l'extérieur du récipient est disposé un collier (170), dont une des extrémités libres est relié à une partie métallique (142) et l'autre extrémité libre entoure le fusible (172).

10. Dispositif selon une des revendications 1 à 9, caractérisé en ce que entre la bride (17) et une zone (110, 162) de la paroi du récipient est insérée une section (113) d'une tôle d'isolation (114) située en dessous du tube de chauffage (15) partant de la bride (17) et l'étayant par en dessous.

11. Dispositif selon la revendication 10, caractérisé en ce que la tôle d'isolation (114) est équipée dans la zone de l'étayage de pieds (121) dirigés vers le bas et reposant sur le fond (122) du récipient (11).

12. Dispositif selon la revendication 10 ou 11, caractérisé en ce que la tôle d'isolation (114) est en acier spécial.

13. Dispositif selon une revendications 10 à 12, caractérisé en ce que la surface de la tôle d'isolation (114) est bien plus grande que celle de la bride (17).

14. Dispositif selon la revendication 1, caractérisé en ce que la pièce métallique (30) est équipée d'une section (32) élargie qui entoure fermement un tube capillaire (34) d'un commutateur capillaire (33), la douille métallique (30) étant équipée de préférence d'une autre section (31) entourant un fusible (37).

15. Dispositif selon la revendications 14, caractérisé en ce que la pièce métallique (30) est reliée fermement à une ouverture (38) de la bride (17) avec sa section élargie (31).

16. Dispositif selon une des revendications précédentes, caractérisé en ce que la résistance chauffante (45) ne remplit le tube de chauffage (15) qu'après une certaine distance (d) de la bride (17).

17. Dispositif selon la revendication 16, caractérisé en ce que la section élargie (31) est au moins aussi longue que la distance (d).

18. Dispositif selon une des revendications précédentes, caractérisé en ce que le tube de chauffage (15) traverse d'abord une première section (60, 61; 70, 71; 80; 90; 100) de la bride (17), ensuite, après avoir traversé des courbes (61; 72; 81; 91; 101), une section en forme de boucle (62, 63; 73, 74; 82, 83; 92 à 95; 102, 103) dirigée vers la bride, et en ce que la section élargie (31) est adjacente à la section en forme de boucle (62, 63; 73, 74; 82, 83; 92 à 95, 102, 103).

19. Dispositif selon la revendication 18, caractérisé en ce que les axes de la section en forme de boucle (63) et de la section élargie (31b) se situent à environ 90° l'un de l'autre et que la section en forme de boucle (63) repose sur la section élargie (31b) dans la zone de transition (64) de la section allongée (32b) et de la section élargie (31b).

20. Dispositif selon la revendication 18, caractérisé en ce que les axes de la section en forme de boucle (74) et de la section élargie (31c) se situent à environ 90° l'un de l'autre et que la section en forme de boucle (74) repôse dans la zone de la section élargie (31c) sur la face supérieure ou inférieure (76) de cette dernière.

21. Dispositif selon la revendication 18, caractérisé en ce que les axes de la section en forme de boucle (63) et de la section élargie (31d) se situent à environ 90° l'un de l'autre et que la section en forme de boucle (83) entoure au moins en partie la section élargie (31d).

22. Dispositif selon la revendication 18, caractérisé en ce que les axes de la section en forme de boucle (94) et de la section élargie (31c) sont au moins approximativement parallèles et que la section en forme de boucle (94) repose dans la zone de la section élargie (31c) sur la face longitudinale (96) de cette dernière.

23. Dispositif selon une des revendications 14 à 22, caractérisé en ce que la pièce métallique (30) se compose de deux tubes (40, 41) assemblés, dont l'un (40) entoure le fusible (37) et l'autre (41) le commutateur capillaire (33).

24. Dispositif selon une des revendications précédentes, caractérisé en ce que la bride (17) repose moyennant au moins une plaque d'étanchéité en silicon (112, 115; 160, 161) sur une section percée (110; 162) de la paroi du récipient (11) et s'étaye sur la face arrière de ce dernier à travers une contre-bride (111; 163).

10

12

11

-13-

14

15

16

20
19
21
18

17

Fig. 1

16

31    37

30

20

19

32    38

34    35    17    33    36

Fig. 2

33

46          45

40

47

41          37

Fig. 3          Fig. 4

Fig. 5a

Fig. 5 b

Fig. 6a

Fig. 6 b

Fig. 7a

Fig. 7 b

Fig. 8 a

Fig. 8 b

Fig. 9 a

Fig. 9 b

Fig. 10 a

Fig. 10 b

Fig. 11

Fig. 12 a          Fig. 12 b

Fig. 13

Fig. 14

Fig. 15